Europäisches Patentamt

European Patent Office

Office européen des brevets

(19)

(11) Veröffentlichungsnummer : **0 121 854**
**B1**

(12) **EUROPÄISCHE PATENTSCHRIFT**

(45) Veröffentlichungstag der Patentschrift :
21.01.87

(21) Anmeldenummer : 84103340.0

(22) Anmeldetag : 27.03.84

(51) Int. Cl.⁴ : **C 08 J   3/12**, **C 08 L 25/12**,
**C 08 L 25/14**, **C 08 L 33/12**,
**C 08 L 57/00**, **C 08 C   1/14**

(54) **Thermoplastische Massen in Pulverform.**

(30) Priorität : 07.04.83 DE 3312540

(43) Veröffentlichungstag der Anmeldung :
17.10.84 Patentblatt 84/42

(45) Bekanntmachung des Hinweises auf die Patenterteilung : 21.01.87 Patentblatt 87/04

(84) Benannte Vertragsstaaten :
DE FR GB IT

(56) Entgegenhaltungen :
DE-A- 1 569 144
DE-A- 1 694 522
DE-B- 1 694 918
DE-B- 1 694 946
Die Akte enthält technische Angaben, die nach dem
Eingang der Anmeldung eingereicht wurden und die
nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Lindner, Christian, Dr.
Riehlerstrasse 200
D-5000 Koeln 60 (DE)
Erfinder : Ott, Karl-Heinz, Dr.
Paul-Klee-Strasse 54
D-5090 Leverkusen (DE)
Erfinder : Braese, Hans-Eberhard
Kaethe-Kollwitz-Strasse 3
D-5000 Koeln 71 (DE)

EP 0 121 854 B1

Jouve, 18, rue St-Denis, 75001 Paris, France

**Beschreibung**

Die Erfindung betrifft durch Emulsionspolymerisation hergestellte thermoplastische Massen in Pulverform auf der Basis von (α-Methyl)Styrolcopolymerisaten mit verbesserten physikalischen Eigenschaften, insbesondere mit verringerter Staubneigung bei der technischen Handhabung und verbesserter Verarbeitbarkeit zu thermoplastischen Massen. Thermoplastische Polymeren mit höherer Wärmeformbeständigkeit auf der Basis von Emulsionspolymerisaten des (α-Methyl)Styrols können aus entsprechenden Polymerlatices bzw. -latexmischungen durch Koagulation als feine Pulver gewonnen werden. Damit diese Pulver technisch eingesetzt werden können, müssen sie nichtstaubend sein ; ihr Feinanteil darf eine bestimmte Grenze nicht überschreiten, und zu grobe Partikel dürfen nicht enthalten sein, weil sie bei der thermoplastischen Verarbeitung stören können. Die Beschaffenheit der Pulver kann in gewissen Grenzen durch Wahl der Koagulationsbedingungen der Latices beeinflußt werden, z. B. durch Wasser/Feststoffverhältnisse, Elektrolytart, Elektrolytkonzentration und Temperatur. Dennoch befriedigen die Resultate nicht.

Gegenstand dieser Erfindung ist ein verbessertes Verfahren zur Herstellung eines pulverförmigen Gemischs aus

A) 60-99 Gew.-Teilen eines Copolymerisats aus 35-5 Gew.-% Acrylnitril und 95-65 Gew.-% Styrol, α-Methylstyrol, Methylmethacrylat oder Mischungen daraus und

B) 1-40 Gew.-Teilen eines weichen kautschukelastischen Polymerisats mit einer Glasübergangstemperatur $< 20\ ^{\circ}$C oder eines Pfropfpolymerisats, dessen Kautschukbasis eine Glasübergangstemperatur $< 20\ ^{\circ}$C besitzt,

das dadurch gekennzeichnet ist, daß man

in einer ersten Stufe einen Latex von A) oder ein Gemisch eines Latex von A) und eines Teils des erforderlichen Latex von B) bei Temperaturen von $20\ ^{\circ}$C bis $100\ ^{\circ}$C durch Zusatz eines Koagulationsmittels koaguliert,

in einer zweiten Stufe den Latex von B) bzw. den fehlenden Teil des Latex von B) zufügt, so daß das gewünschte Mengenverhältnis von A) und B) erreicht wird, wobei gegebenenfalls gleichzeitig oder danach weiteres Koaguliermittel und/oder Wasser zugefügt wird, bis ein Feststoff/Wasser-Gewichtsverhältnis von 1 : 3 bis 1 : 15 erreicht ist, und

in einer dritten Stufe das ausgefällte Gemisch von A) und B) von der wäßrigen Phase trennt und trocknet.

Vorzugsweise werden in dem Verfahren 1-20 Gew.-Tle. des Polymerisates B, bezogen auf 100 Gew.-Tle. Gesamtmischung, in der 2. Stufe des Verfahrens zugeführt. Werden in der ersten Stufe des Verfahrens Mischungen aus Latices von Polymerisaten A und B eingesetzt, dann sind vorzugsweise die Mengenverhältnisse von A : B so zu wählen, daß 1-20 Gew.-Tle. B (in Form eines Latex) in der 2. Verfahrensstufe zugeführt werden.

Man erhält so schüttfähige, nichtstaubende Pulver eines mittleren Korndurchmessers von 0,05 bis 4 mm.

Bevorzugte kautschukelastische Polymerisate B sind :

B1 : Pfropfpolymerisate von Styrol, Acrylnitril, Methylmethacrylat oder Mischungen daraus auf Dienkautschuken mit einem Kautschukgehalt von $\geq 30$ Gew.-% und

B2 : Kautschuke, die Dienhomopolymerisate oder -copolymerisate (beispielsweise mit Styrol und/oder Acrylnitril) darstellen. Ebenfalls geeignet sind Alkylacrylatkautschuke, insbesondere Polymerisate von $C_1$-$C_8$-Alkylacrylaten,

und insbesondere Mischungen aus $B_1$ und $B_2$.

Die Komponente B kann auch aus einem Gemisch von ungepfropften Kautschuken, z. B. ungepfropften Alkylacrylatkautschuken, insbesondere in vernetzter Form, und von Alkylacrylatpfropfkautschuken mit Kautschukgehalten von 70-95 Gew.-% bestehen.

Die erfindungsgemäß erhaltenen Polymerisatpulver enthalten 60 bis 99 Gew.-Teile, bevorzugt 80 bis 99 Gew.-Teile, des thermoplastischen Copolymerisats A und 1 bis 40 Gew.-Teile, insbesondere 1 bis 20 Gew.-Teile, der kautschukelastischen Komponente B. In der Stufe 2 des Koagulationsverfahrens kann entweder die gesamte erforderliche Menge an Latex des kautschukelastischen Polymerisats B zugegeben werden oder ein Teil dieser Mengen, wenn nämlich bereits in der Stufe 1 ein Teil des Latex B zugegeben worden ist. Bevorzugt ist die Arbeitsweise, bei der ganze Latex B in der Stufe 2 eingeführt wird.

Die Koagulationen in der Stufe 1 und 2 werden entweder bei gleichen oder verschiedenen Temperaturen von $20$-$100\ ^{\circ}$C durchgeführt, insbesondere aber bei Temperaturen von 50 bis $95\ ^{\circ}$C. Die eingesetzten Latices der Komponenten A und gegebenenfalls B werden dabei durch übliche Koaguliermittel wie pH-Wert-Absenkung oder Elektrolytzusatz auf bekannte Art und Weise koaguliert, z. B. durch Zusatz von Mineralsäuren oder Carbonsäuren (Essigsäure, Ameisensäure) und/oder durch Zusatz von wasserlöslichen Salzen wie (Erd)Alkalicarbonsäuresalze, anorganische Sulfate, Chloride, Phosphate

**0 121 854**

wie z. B. Magnesiumsulfat, Natriumchlorid, Calziumchlorid, Phosphorsäure, Aluminiumsulfat oder Kaliumchlorid.

Vor der Stufe 2 des Verfahrens liegt bereits eine Polymersuspension in wäßrigem Medium vor ; es wird nun weiterer Latex zudosiert, bis die gewünschte erfindungsgemäße Bruttozusammensetzung erreicht ist ; gleichzeitig kann weiteres Koagulierungsmittel in die Suspension eingetragen werden ; dieses Koagulierungsmittel kann auch nach der Latexzugabe der Stufe 2 dort eingebracht werden. Dabei entsteht das Polymerisat-Pulver in der gewünschten Form.

Das Polymer (A + B)-Feststoff : Wasser-Gewichtsverhältnis ist 1 : 3 bis 1 : 15, bevorzugt 1 : 5 bis 1 : 10.

In der Stufe 3 wird nun die engültig ausgefällte Polymerisatsuspension, d. h. die Aufschlämmung von Polymerisatpartikeln in wäßrigem Medium, aufgearbeitet, z. B. durch Filtration und Trocknung ; dabei resultieren erfindungsgemäße Pulver eines mittleren Teilchendurchmessers von etwa 0,05-4 mm, insbesondere von 0,1-2 mm.

Die erfindungsgemäße Koagulation kann halbkontinuierlich oder vollkontinuierlich durchgeführt werden, bevorzugt ist die kontinuierliche Arbeitsweise.

Vinylpolymerisate A im Sinne der Erfindung bestehen aus 35-5 Gew.-% Acrylnitril und 95-65 Gew.-% Styrol, $\alpha$-Methylstyrol, Methylmethacrylat oder Mischungen daraus ; bevorzugte Polymerisate enthalten ein Polymerisat von 70-50 Gew.-Teilen $\alpha$-Methylstyrol, 20-35 Gew.-Teilen Acrylnitril und 0-30 Gew.-Teilen Styrol ; sie können durch wäßrige Emulsionspolymerisation unter radikalischer Initiierung in bekannter Weise hergestellt werden.

Kautschukelastische Polymerisate B im Sinne der Erfindung sind durch wäßrige Emulsionspolymerisation zugänglich. Sie haben Glasübergangstemperaturen Tg < 20 °C, insbesondere von — 80° bis 0 °C. Beispiele sind unvernetzte, teilvernetzte oder hochvernetzte Dienhomopolymerisate (z. B. Poly-Butadien, -Chloropren, -Dimethylbutadien) oder Diencopolymerisate mit bis zu 50 Gew.-% Styrol, Acrylnitril, Methylmethacrylat, Alkylacrylat, Vinylethern ; bevorzugt sind Butadien-Acrylnitril-Copolymerisate mit Gelgehalten von 50 bis 95 Gew.-%, sowie un- bis hochvernetzte Alkylacrylatkautschuke.

Pfropfpolymerisate B sind Pfropfkautschuke, deren Kautschukanteil Glasübergangstemperaturen Tg < 20 °C, insbesondere von — 80 bis 0 °C, aufweist. Diese Pfropfkautschuke enthalten vorzugsweise 20-90 Gew.-%, insbesondere 50 bis 90 Gew.-%, Kautschuk ; aufgepropfte Polymere leiten sich insbesondere von Vinylmonomeren wie Styrol, $\alpha$-Methylstyrol, Methylmethacrylat, Acrylnitril und Mischungen davon ab. Kautschukpfropfgrundlagen können sich von Dienhomo- oder -copolymerisaten ableiten oder können Dien-freie Kautschuke, insbesondere auf der Basis von Alkylacrylaten sein. Bevorzugte Pfropfkautschuke enthalten Kautschukgrundlagen mit Gelgehalten von 50-95 Gew.-%, insbesondere von 70-90 Gew.-%, und leiten sich von Kautschukemulsionen mit mittleren Teilchendurchmessern $d_{50}$ von 0,08-0,8 $\mu$m, insbesondere 0,1-0,5 $\mu$m ab.

Insbesonders bevorzugte Komponenten B sind Dienmonomer-(co)polymerisate, Alkylacrylat(co)polymerisate und Pfropfpolymerisate auf Dienmonomer(co)polymerisaten bzw. auf Alkylacrylat(co)polymerisaten.

Die erfindungsgemäß hergestellten Pulver zeichnen sich durch verbesserte Eigenschaften aus, insbesondere durch geringere Staubneigung und bessere Rieselfähigkeit. Sie dienen im allgemeinen als Modifikatoren für andere Kunststoffe, z. B. für Polyvinylchlorid, und zeichnen sich durch besonders günstiges Verhalten beim Mischen aus.

Beispiele

I)  A)  Eingesetzte Latices thermoplastischer Vinylpolymerisate :

1) Latex, enthaltend ein Copolymer aus 31 Gew.-% Acrylnitril und 69 Gew.-% $\alpha$-Methylstyrol. L-Wert des Polymerisates = 70.

2) Latex, enthaltend ein Copolymer aus 30 Gew.-% Acrylnitril, 20 Gew.-% Styrol und 50 Gew.-% $\alpha$-Methylstyrol. L-Wert des Polymerisates = 60.

B)  Latices kautschukelastischer Polymerer bzw. von Pfropfkautschuken :

1) Latex eines Pfropfcopolymeren von Styrol/Acrylnitril (Gew.-Verhältnis : 72/28) auf vernetztes Polybutadien einer Teilchengröße von 0,4 $\mu$m und einem Gelgehalt von 80 Gew.-% ; das Pfropfpolymer enthält 50 Gew.-% Kautschuk.

2) Latex eines Butadien-Acrylnitril-Copolymers mit einem Gehalt von 30 Gew.-% Acrylnitril und einer Teilchengröße von 0,15 $\mu$m ; der Kautschuk besitzt einen Gelgehalt von 75 Gew.-%.

3) Latex eines mit Triallylcyanurat vernetzten Poly-n-butylacrylates einer Teilchengröße von 0,35 $\mu$m ; Gelgehalt des Kautschuks 82 Gew.-%.

4) Latex eines mit Styrol/Acrylnitril-Gemisch (Gew.-Verhältnis : 72/28) bepfropften, vernetzten, grobteiligen Poly-n-butylacrylates einer Teilchengröße von 0,4 $\mu$m ; Gelgehalt des Kautschuks 89 % ; das Pfropfpolymer enthält 20 % Styrol/Acrylnitril-Harz.

3

II) Herstellung der Pulver

Latices der Polymere A werden gegebenenfalls mit Latices der Polymeren B gemischt und anschließend mit 1,2 % eines phenolischen Antioxidants stabilisiert ; die Latexmengen werden so gewählt, daß x Gew.-Teile Polymer A und y Gew.-Teile Polymer B in der Latexmischung oder in dem Latex vorliegen. Diese Latices werden anschließend bei 95 °C mittels einer Lösung von 150 Gew.-Teilen $MgSO_4xH_2O$ (Bittersalz) und 50 Gew.-Teilen Essigsäure in 5 000 Gew.-Teilen Wasser (bezogen auf 1 000 Gew.-Teile Polymerfeststoff der Latices) unter Rühren gefällt, indem man die Latices mit der Elektrolytlösung vermischt. Nachdem alles Polymer kaoguliert ist, werden nachfolgend z Gew.-Teile Polymer B (in Form eines stabilen Latex) bei 95 °C derart in die gebildete Suspension eingespeist, daß Koagulation des Latex eintritt. Nach erfolgter Koagulation heizt man die gesamte Suspension 1/2 Std. auf 95-98 °C auf. Nach Abkühlen auf RT wird mittels Zentrifugen filtriert und danach bis zur Elektrolytfreiheit gewaschen. Das Feuchtgut wird anschließend bei 70 °C getrocknet.

III) Vergleichsversuch

In diesem Fall werden Latices A mit Latices der Polymeren B vermischt, wobei die Latexmengen so gewählt werden, daß in den Mischungen x Gew.-Teile A und (y + z) Gew.-Teile B vorliegen. Nach Stabilisierung wie bei II wird mit einer wäßrigen $MgSO_4xH_2O$/Essigsäure-Lösung der Zusammensetzung wie bei II gefällt (pro 1 000 Gew.-Teile Polymer A + B werden 5 200 Gew.-Teile Elektrolytlösung verwendet). Nach erfolgter Koagulation bei 95 °C heizt man die gesamte Suspension 1/2 Stunde auf 95-98 °C auf. Die weitere Aufarbeitung erfolgt analog II.

(Siehe Tabelle 1 Seite 5 f.)

V) Eigenschaften der Pulver

Korngrößenanalyse der trockenen Pulver IV :

Pulver 7 : Korngröße (mm)

| Korngröße (mm) | Prozentanteil (Gew-%) |
|---|---|
| 3,15 | 9,6 |
| 2,0-3,15 | 6,3 |
| 1,0-2,0 | 19,5 |
| 0,8-1,0 | 6,3 |
| 0,4-0,8 | 17,8 |
| 0,2-0,4 | 18,7 |
| 0,1-0,2 | 14,9 |
| 0,05-0,1 | 5,5 |
| < 0,05 | 1,4 |

Pulver 1 :

| Korngröße (mm) | Prozentanteil (Gew.-%) |
|---|---|
| 3,15 | 19,9 |
| 2,0-3,15 | 9,1 |
| 1,0-2,0 | 14,3 |
| 0,8-1,0 | 4,2 |
| 0,4-0,8 | 15,7 |
| 0,2-0,4 | 13,3 |
| 0,1-0,2 | 14,2 |
| 0,05-0,1 | 7,0 |
| < 0,05 | 2,3 |

Staubwerte der Pulver

| Pulver | Staubwert |
|---|---|
| 1 | 8 + 1 |
| 2 | 4 + 1 |
| 3 | 7 + 1 |
| 4 | 1 + 1 |
| 5 | 2 + 1 |
| 6 | 2 + 1 |
| 7 | 74 + 12 |
| 8 | 73 + 12 |

IV)

<div style="text-align:center">Tabelle 1</div>

| Pulver | Gew.-Tle. A (x) | Gew.-Tle. B (y) | Gew.-Tle. B (z) | Verfahren nach II | Verfahren nach III |
|---|---|---|---|---|---|
| 1 | Polymer $A_1$) 95 | – | Polymer $B_2$) 5 | X | |
| 2 | Polymer $A_2$) 90 | – | Polymer $B_2$) 10 | X | |
| 3 | Polymer $A_1$) 73,63 | Polymer. $B_1$) 21,37 | Polymer $B_2$) 5 | X | |
| 4 | Polymer $A_1$) 80 | – | Polymer $B_4$) 20 | X | |
| 5 | Polymer $A_1$) 90 | – | Polymer $B_3$) 10 | X | |
| 6 | Polymer $A_1$) 80 | Polymer $B_4$) 10 | Polymer $B_4$) 10 | X | |
| 7 Vergleich | Polymer $A_1$) 95 | – | Polymer $B_2$) 5 | | X |
| 8 Vergleich | Polymer $A_1$) 90 | – | Polymer $B_2$) 10 | | X |

**0 121 854**

Wie aus der obigen Tabelle hervorgeht, werden nach dem erfindungsgemäßen Verfahren Pulver niedriger Staubwerte erhalten ; die Pulver 7 und 8, die mit 1 und 2 zu vergleichen sind, liefern dagegen Pulver hoher Staubneigung. Dieser Effekt ist vermutlich nicht nur auf eine Agglomerisation der Pulverfeinanteile zurückzuführen : Vergleicht man nämlich die Pulverkorngrößenanalyse z. B. der Pulver 1 und 7, so läßt sich daraus nicht ohne weiteres eine Staubfreiheit des Pulvers 1 ableiten : Beide Pulver enthalten praktisch identisch viele Feinanteile. Somit war die Staubfreiheit der erfindungsgemäßen Pulver überraschend.

Die erfindungsgemäßen Pulver besitzen außerdem eine verbesserte, gleichmäßige Rieselfähigkeit und eignen sich in hervorragender Weise als Rohstoffe für thermoplastische Formmassen.

VI) Prüfmethode und Abkürzungen

Korngrößenanalyse :

Benutzt wurde eine Prüfsiebmaschine ; die Prüfsiebe waren nach DIN 4 188 genormt ; die Siebmaschine arbeitete mit Vibrationssieben (Hersteller : Fa. Harer u. Brecker, Typ : EMC. 200-61).

Staubwerte :

Als Maß für den Staubwert gilt die Schwächung eines durch einen Auffangbehälter gehenden Lichtstrahls, welche durch das Aufwirbeln von Staub in diesem Behälter hervorgerufen wird. Der Staub wird durch das Herabfallen von Pulver aus einer durch die Apparatur vorgegebenen Höhe erzeugt. Die Lichtschwächung wird sofort nach dem Aufprall des Pulvers auf den Boden des Behälters und 30 Sek. später gemessen. Beide Werte werden addiert. (Die Prüfung erfolgt mit 30 g Pulver in einem modifizierten Staubwertmeßgerät der Fa. Cassella).

Der L-Wert entspricht $\eta$ spez./C bei C = 5 g/l in Methylethylketon bei 25 %. Die Teilchendurchmesser stellen mittler mittlere Teilchendurchmesser $d_{50}$ dar (siehe dazu Ultrazentifugen-Messungen nach W. Scholtan et al. Kolloidz. u. Z. Polymere 250 (1972), 783-796). Bei Emulsionen wurde sie durch Ultrazentrifugen-Messungen ermittelt ; bei Pulvern durch Siebanalyse oder Sedimentationsanalysen. Die $d_{50}$-Werte sind Gewichtsmittelwerte.

**Patentansprüche**

1. Verfahren zur Herstellung eines pulverförmigen Gemischs aus

A) 60-99 Gew.-Teilen eines Copolymerisats aus 35-5 Gew.-% Acrylnitril und 95-65 Gew.-% Styrol, α-Methylstryrol, Methylmethacrylat oder Mischungen daraus und
B) 1-40 Gew.-Teilen eines weichen kautschukelastischen Polymerisats mit einer Glasübergangstemperatur < 20 °C oder eines Pfropfpolymerisats, dessen Kautschukbasis eine Glasübergangstemperatur < 20 °C besitzt,

das dadurch gekennzeichnet ist, daß man
in einer Stufe einen Latex von A) oder ein Gemisch eines Latex von A) und eines Teils eines Latex von B) bei Temperaturen von 20 bis 100 °C durch Zusatz eines Koagulationsmittels koaguliert,
in einer zweiten Stufe den Latex von B) bzw. den fehlenden Teil des Latex von B) zufügt, so daß das gewünschte Mengenverhältnis von A) und B) erreicht ist, wobei gegebenenfalls gleichzeitig oder danach weiteres Koaguliermittel und/oder Wasser zugefügt wird, bis ein Feststoff/Wasser-Gewichtsverhältnis von 1 : 3 bis 1 : 15 erreicht ist, und
in einer dritten Stufe das ausgefällte Gemisch von A) und B) von der wäßrigen Phase trennt und trocknet.

2. Gemische gemäß Anspruch 1, dadurch gekennzeichnet, daß B) eine Mischung aus

B1 : Pfropfpolymerisaten von Styrol, Acrylnitril, Methylmethacrylat oder Mischungen daraus auf Dienkautschuke mit Kautschukgehalten ≥ 30 % und
B2 : Kautschuken, die Dienhomopolymerisate oder -copolymerisate darstellen,

ist, wobei das Polymer B2 in Latexform in die zweite Stufe eingebracht wird.

**Claims**

1. Process for the production of a pulverulent mixture of

A) 60-99 parts by weight of a copolymer of 35-5 % by weight of acrylonitrile and 95-65 % by weight

of styrene, α-methylstyrene, methyl methacrylate or mixtures thereof and

B) 1-40 parts by weight of a soft rubber-elastic polymer with a glass transition temperature of < 20°C or of a graft polymer, the rubber basis of which has a glass transition temperature of < 20°C,

which is characterised in that,

in a first stage, a latex of A) or a mixture of a latex of A) and a portion of a latex of B) are coagulated by the addition of a coagulant at temperatures of 20 to 100 °C,

in a second stage the latex of B) or the remaining part of the latex of B) is added, so that the required quantity ratio of A) and B) is attained, more coagulant and/or water optionally being added at the same time or subsequently, until a solids/water weight ratio of 1 : 3 to 1 : 15 is obtained, and,

in a third stage, the precipitated mixture of A) and B) is separated from the aqueous phase and dried.

2. Mixtures according to Claim 1, characterised in that B) is a mixture of

B1 : graft polymers of styrene, acrylonitrile, methyl methacrylate or mixtures thereof on diene rubbers with rubber contents ⩾ 30 % and

B2 : rubbers which are diene homopolymers or copolymers,

the polymer B2 being introduced in latex form into the second stage.

**Revendications**

1. Procédé pour la fabrication d'un mélange en poudre de :

A) 60-99 parties en poids d'un copolymère de 35-5 % en poids d'acrylonitrile et 95-65 % en poids de styrène, d'α-méthylstyrène, de méthacrylate de méthyle ou de leurs mélanges et

B) 1-40 parties en poids d'un polymère élastique caoutchouteux mou ayant une température de transition vitreuse inférieure à 20 °C ou d'un polymère greffé dont la base de caoutchouc a une température de transition vitreuse inférieure à 20 °C,

qui est caractérisé en ce que,

dans une première étape, on coagule un latex de A) ou un mélange d'un latex de A) et d'une partie d'un latex de B) à des températures de 20 à 100 °C par addition d'un agent coagulant,

dans une seconde étape, on ajoute le latex de B) ou la partie manquante du latex de B), de manière à atteindre le rapport désiré de A) et de B), le cas échéant en ajoutant encore simultanément ou ultérieurement de l'agent coagulant et/ou de l'eau, jusqu'à ce que l'on atteigne un rapport pondéral matières solides/eau de 1 : 3 à 1 : 15 et

dans une troisième étape, on sépare le mélange précipité de A) et B) de la phase aqueuse et on le sèche.

2. Mélanges selon la revendication 1, caractérisés en ce que B est un mélange de :

B1 : polymères greffés de styrène, d'acrylonitrile, de méthacrylate de méthyle ou de leurs mélanges sur des caoutchoucs diéniques, ayant des teneurs en caoutchouc supérieures ou égales à 30 % et

B2 : caoutchoucs qui consistent en homopolymères ou copolymères de diènes,

le polymère B2 étant introduit dans la seconde étape sous forme de latex.